Europäisches Patentamt

European Patent Office

Office européen des brevets

(11) Publication number: **0 300 108**
**A2**

## EUROPEAN PATENT APPLICATION

(21) Application number: 87402225.4

(51) Int. Cl.⁴: **F16H 1/32**

(22) Date of filing: 07.10.87

(30) Priority: 18.07.87 CN 87102061

(43) Date of publication of application:
**25.01.89 Bulletin 89/04**

(84) Designated Contracting States:
**DE FR**

(71) Applicant: HUNAN RESEARCH INST. OF
MACHINERY
**24 Changtang Li, Ziyuan Rd.,
Changsha, Hunan(CN)**

(72) Inventor: Ganxu,Zhou
**24 Changstang Li, Ziyuan Rd.
Changsha,Hunan(CN)**

(74) Representative: Bloch, Gérard et al
**6, rue du Faubourg Saint-Honoré
F-75008 Paris(FR)**

(54) Planetary transmission mechanism and device of involute gears with complex minor teeth differences.

(57) The invention has for its object a planetary transmission mechanism of involute gears with complex minor teeth-differences, relating to involute gear planetary transmission mechanism.

According to the invention said mechanism incorporates at least two internal meshing gear pairs, and the planet gears of each of which are running sleeved on two crankaxles (6,7) of a crankshaft (5) used as drive input. Said planet gears are conjuncted by means of a rotational transmission mechanism and the internal gear ($Z_4$) of one pair of the said internal gear pairs is stationary, whereas the internal gear ($Z_1$) of the other pair of the same is integrated with the drive output shaft (1).

FIG.1

## Planetary transmission mechanism and device of involute gears with complex minor diferences.

This invention relates to involute gear planetary transmission mechanism, or more specifically relates to involute gears with minor teeth differences planetary transmission mechanism.

The previous available techniques for involute gears with minor teeth-differences planetary transmission mechanism with same transmission ratio apply unity teeth-difference, unity module and unity eccentricity. The application of relocation gear to prevent various interferences causes the increase in gear meshing angle and radial load on the rotor arm bearings and reduces its meshing efficiency and service life. Most of the structures of such available techniques find difficulties in solving the dynamic balancing, disadvantage in carrying out transmission ratio seriationed product design and manufacture in terms of preferential number series, and their limitations confine solely to reducer transmission.

The intention of the present invention is to provide a novel planetary transmission mechanism of involute gears with complex minor teeth-differences that has broad and concentrated transmission ratios favorable for carrying out transmission ratio seriationed product designs and manufacture in terms of preferential number series.

The further intention of the present invention is to provide such said mechanism that does not require gear correction but incorporates standard meshing angle favorable to increase meshing efficiency and increase radial load on the rotor arm bearings.

The further intention of the present invention is to provide the said mechanism with simple construction and easy to carry out dynamic balancing.

The further intention of the present invention is to apply the said mechanism to construct various planetary transmission devices of involute gears with complex minor teeth-differences.

The said intentions of the present invention are implemented as follows. The said involute gear planetary transmission mechanism of complex minor teeth-differences incorporates two or more than two internal meshing gear pairs, and the planet gears of each of which are running sleeved on two crankaxles of a crankshaft used as drive input. The said two or more than two planet gears are conjuncted by means of a rotational transmission mechanism and the internal gear of one pair of the said internal gear pairs is stationary, whereas the internal gear of the other pair of the same is integrated with the drive output shaft while when incorporating more than two pairs of internal gear pair, two or more than two internal gears are stationed alternatively whereas another internal gear is integrated with the drive output shaft. The teeth-difference, module and the corresponding crankshaft's eccentricity of the said internal gear pairs can be different.

The said internal gear pairs are straight teeth gear pairs, or cycloidal gear pairs or round arc gear pairs with teeth-difference favorably to be 5 to 8 teeths.

The said planetary transmission mechanism of involute gears with complex minor teeth-differences can be used as a basic structure, where drive input crankshaft is conjuncted with the drive input gear box for constituting the planetary transmission box of involute gears with complex minor teeth-differences that meet various applications and are applicable in lateral, erected, elevated and lean positions.

The advantages of the present invention are obvious.

The transmission ratio of the present invention is broad and concentrated and allowable to carry out transmission ratio seriationed product designs and manufacture in terms of preferential number series, enabling selection among the great many transmission ratio combinations of one that has high meshing efficiency and rational construction of the gear pairs.

Transmission ratio from 1:28 to 1:280 and meshing efficiency of 99% to 94% can be obtained.

All transmission ratios of the mechanism from the present invention are achievable with the application of non-correction cylindrical gear combination and the radial load on the rotor arm bearings can be reduced by 2.5 times comparing to the general involute one tooth-difference planetary transmission, thus extending the service life of the bearings, eliminating the complicated calculation of the gear correction, simplifying the construction of the whole mechanism, minimizing the volume and weight and facilitating the manufacturing, installation and maintenance.

The planetary gear pairs of the present invented mechanism can achieve an easy balancing, stable transmission, low noise, the input rotation below 1,800 r. p. m. and the load noise value at 58-80 d B.

The construction of the present invention involute planetary gear transmission box with complex minor teeth-difference has the merits of simple construction, good processing performance, applicable with non-correction involute gears without the necessity of paired processing for the planetary gears, no restrained condition for assembly, applicable with usual standard bearings and high interchangeability of parts.

The present invented transmission box has large load capacity, long service life and wide varieties of connection methods for installation. Each model of the device has, in addition to totally 80 nominal transmission ratios within 1:20 -1:2,000, 1:10 - 1:4,000,000 optional transmission ratios, 16 torque scalings, 60 - 100,000 Nm transmission torque and 0.06 - 200 Kw transmission power for users to choose.

The transmission box of the present invention can conveniently be applied to change-speed transmission and combined with multi-speed motors or stepless motors. It has a broad range of speed changes, the minimum mechanical characteristic alteration and easy to achieve automatic control for gear motor integral change-speed transmission.

Fig. 1 is the principle diagram of the present invention planetary transmission mechanism of involute gears with complex minor teeth-differences incorporating drive disk rotational delivery mechanism.

Fig. 2 is the principle diagram of the present invented planetary transmission mechanism of involute gears with complex minor teeth-differences incorporating planetary rotational delivery mechanism.

Fig. 3 is the principle diagram of the present invented planetary transmission mechanism of involute gears with complex minor teeth-differences incorporating crank rotational delivery mechanism.

Fig. 4 is the principle diagram of the present invented planetary transmission mechanism of involute gears with complex minor teeth-differences incorporating pinaxle-and-pin sleeve rotational delivery mechanism.

Fig. 5 is the principle diagram of the present invented planetary change-speed transmission mechanism of involute gears with complex minor teeth-differences incorporating planetary rotational delivery mechanism.

Fig. 6 is the principle diagram of the present invented single-(speed) driving double-axle planetary reducer.

Fig. 7 is the principle diagram of the present invented high-speed double-(step) driving planetary reducer incorporating helical bevel gear pair.

Fig. 8 is the principle diagram of the present invented high-speed double-(step) driving planetary reducer incorporating skew gear pair.

Fig. 9 is the principle diagram of the present invented high-speed double-(step) driving planetary reducer incorporating planetary mechanism.

Fig. 10 is the principle diagram of the present invented double-(step) driving planetary reducer with tandem conjunction between the planetary reducers.

Fig. 11 is the principle diagram of the present invented high-speed three-(speed) driving planetary reducer incorporating planetary mechanism.

Fig. 12 is the principle diagram of the present invented planetary reducer with simultaneous outputs of two rotations.

Fig. 13 is the principle diagram of the present invented planetary reducer with simultaneous outputs of multiple rotations.

Fig. 14 is the principle diagram of the present inverted lateral double-axle planetary reducer.

Fig. 15 is the principle diagram of the present invented planetary reducer with three transmission ratios.

Fig. 16 is the principle diagram of the present invented low-speed planetary reducer with tandem planetary reducer in low-speed step.

Fig. 17 is the constructional diagram of the present invented lateral double-axle planetary reducer.

Fig. 18 is the constructional diagram of the present invented planetary reducer with rotor arm bearing using slide bearings.

Fig. 19 is the constructional diagram of the present invented planetary reducer with motors in series connection.

Fig. 20 is the constructional diagram of the present invented planetary change-speed reducer.

Fig. 21 is the front viewed sectional diagram of the present invented drive disk rotational delivery mechanism.

Fig. 22 is the side viewed diagram of the mechanism shown is Fig. 21.

Fig. 23 is the front viewed sectional diagram of the present invented planetary drive delivery mechanism.

Fig. 24 is the side viewed diagram of the mechanism shown in Fig. 23.

Fig. 25 is the front viewed sectional diagram of a kind of transformation of the present invented planetary rotational delivery mechanism.

Fig. 26 is the A- A sectional diagram of the mechanism shown in Fig. 25.

Fig. 27 is the front viewed sectional diagram of another king of transformation of the present invented planetary rotational delivery mechanism.

Fig. 28 is the B- B sectional diagram of the mechanism shown in Fig. 27.

Fig. 29 is the front viewed sectional diagram of another kind of transformation of the present invented planetary rotational delivery mechanism.

Fig. 30 is the C- C sectional diagram of the mechanism shown in Fig. 29.

Fig. 31 is the front viewed sectional diagram of the present invented crank rotational delivery mechanism.

Fig. 32 is the side viewed diagram of the mechanism shown in Fig. 31.

Fig. 33 is the front viewed sectional diagram of the present invented pinaxie-and-pinsieeve rotational delivery mechanism.

Now, with reference to the attached drawings, the details of some optimal embodiments of the present invention will be given, and though the description of which may provide easier understanding of the present invention, it is by no means confining the scope of the present invention within those embodiments described.

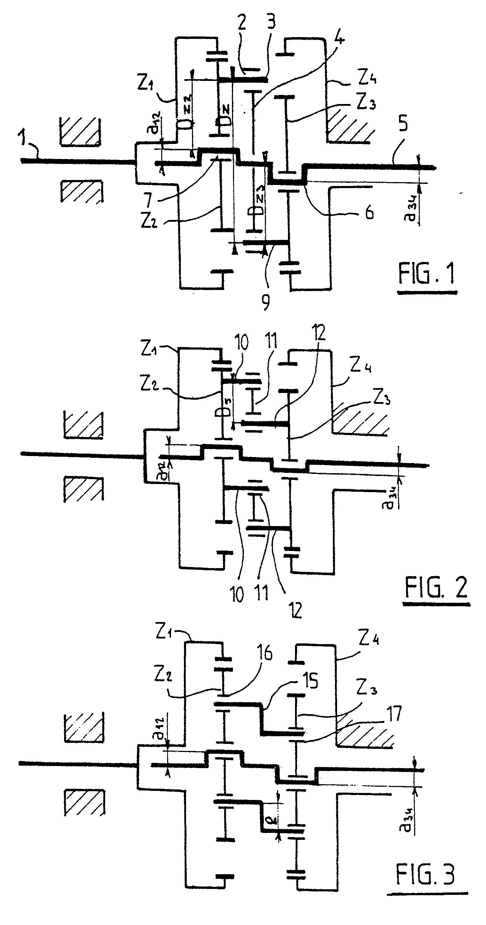

As shown in fig. 1, the crankshaft (5) has two crankpins, or toggles (7) (6), the internal gear $Z_4$ is stationary the internal gear $Z_3$ is loose sleeved on the crankaxle of the toggle (6) forming a runningfit to each other, planet gear $Z_3$ meshes with planet gear $Z_4$, another planet gear $Z_2$ is loose sleeve on the crankaxle of the other toggle (7) forming running fit to each other, another internal gears $Z_1$ and $Z_2$ are meshing ; the output shaft (1) is stationaryly fixed with the internal gear $Z_1$ and the output shaft (1) is coaxial with crankshaft (5). The drive disk rotational delivery mechanism consists in the drivedisk (4) and the pinaxles (3) (9) fixed on the gears $Z_2$ and $Z_3$. The said drive disk (4) floats on the intermediate journal of the crankshaft (5) and there are n pieces of pin holes (2) evenly distributed along its distribution circle $D_2$, whereas n pieces of pinaxles (3) (9) are evenly distributed and fixed on the distribution circles $D_{22}$ and $D_{22}$ of $Z_2$ and $Z_3$ and inserted into the pin holes (2) of the drive disk as well.

There are generally five relationships for selection of the optimal transmission ratio combinations for rational construction, namely :

(1) $Z_1 - Z_2 > Z_4 - Z_3$, $m_{12} = m_{34}$ $a_{12} > a_{34}$,

(2) $Z_1 - Z_2 > Z_4 - Z_3$, $m_{12} \neq m_{34}$ $a_{12} \neq a_{34}$,

(3) $Z_1 - Z_2 > Z_4 - Z_3$, $m_{12} < m_{34}$ $a_{12} = a_{34}$,

(4) $Z_1 - Z_4 > Z_4 - Z_3$, $m_{12} \neq m_{34}$ $a_{12} \neq a_{34}$,

(5) $Z_1 - Z_2 > Z_4 - Z_3$, $m_{12} = m_{34}$ $a_{12} = a_{34}$.

Where $Z_1$, $Z_2$, $Z_3$, $Z_4$ refer to teeth numbers of the corresponding gears, and

$m_{12}$... ... module of gears $Z_1$ and $Z_2$,

$m_{34}$... ... module of gears $Z_3$ and $Z_4$,

$a_{12}$... ... toggle eccentricity on gear pairs $Z_1$, $Z_2$,

$a_{34}$... ... toggle eccentricity on gear pair $Z_3$, $Z_4$.

Meanwhile, it should be

$d_2 = D - 2a_{12} - \delta$,

$d_3 = D - 2a_{34} - \delta$,

$D_{22} = D_{23} = D_z$.

Where

$d_2$... ... pin sleeve diameter of the pinaxle on the gear $Z_2$,

$d_3$... ... pin sleeve diameter of the pinaxle on the gear $Z_3$,

$D$ ... ... diameter of the pin hole on drive disk,

$\delta$ ... ... clearance preserved for processing and assembly

$D_{22}$... ... diameter of the distribution circle of the pinaxle on gear $Z_2$,

$D_{23}$... ...diameter of the distribution circle of the pinaxle on gear $Z_3$,

$D_z$... ...diameter of the distribution circle of the pin hole on the drive disk.

The above said mechanism works as follows :

When motion is input from crankshaft (5), the planet gear $Z_3$ produces a common rotation and a self rotation that is delivered through drive disk rotational delivery mechanism to gear $Z_2$ which subsequently produces self and common rotations under the action of $Z_3$ and crankshaft (5) and thus an output of reduced rotation is delivered through gear $Z_1$ that internally meshes with $Z_2$ and the output shaft (1).

The transmission mechanism shown in fig. 2 is similar by and large to that shown in fig. 1 with the only difference of incorporation of the planetary rotational delivery mechanism. Now, this description will omit the similarity but follow in details the constructional dissimilarity between them. The planetary rotational delivery mechanism consists of planet gear (11) and pinaxles (10) (12), which are evenly distributed along the distribution circles of the pinaxles on gears $Z_2$ and $Z_3$. The said planet gear (11) is a flat cylinder (or other shapes) with two holes symetrically opened on its diameter. The said pinaxles (10) (12) are correspondingly inserted into the holes, forming running fit relation therein. Their genometric sizing relation should obey the following formulas :

$D_s = a_{12} = a_{34}$ ;

$D_{22} = D_{23} = D_z$

where

$D_s$ ... ... center distance between the two holes on the planet gear,

$D_z$ ... ... diameter of the orbit circle formed by common rotation of the planet gear center around the center of the reducer,

$D_{22}$, $D_{23}$ as defined in the mechanism shown in fig. 1. The transmission mechanism shown in fig. 3 is similar in construction by and large to that shown in fig. 1 with the only difference of incorporation of a crank rotational delivery mechanism. By omitting the similarity, this description will follow in details the construction dissimilarity between them. The crank rotational deliverry mechanism consists in the crank (15) and the crank holes (16) (17) opened on the gears $Z_2$ and $Z_3$. The said crank holes (16) (17) are evenly distributed along the distribution circles of the crank holes of gears $Z_2$ and $Z_3$. Some crank axles of the said crank (15) are respectively inserted into the corresponding crank holes (16) (17) and forming running fits therein. Their geometric sizing relation should obey the

following formulas :

$$L = a_{12} = a_{34} ;$$
$$D_{z2} = D_{z3} = D_z.$$

Where

L ... ... distance between the two axes of the crank's crankaxles

$D_z$ ... ... diameter of the concentric circle formed by the rotation of the crank center around the crankshaft,

$D_{z2}$ ... ... diameter of the distribution circle of the crank hole on the gear $Z_2$,

$D_{z3}$ ... ... diameter of the distribution circle of the crank hole in the gear $Z_3$, and

$a_{12}$ and $a_{34}$ as defined above.

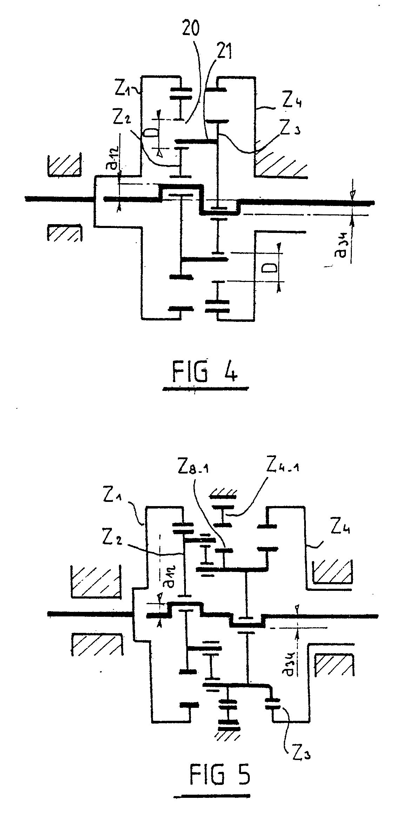

The mechanism shown in fig. 4 is similar in construction by and large to that shown in fig. 1 with only the difference of incorporation of a pinaxle-and-pinsleeve rotational delivery mechanism. Omitting the similarity, this description will follow the construction dissimilarity. The said pinaxle-and-pinsleeve rotational delivery mechanism consists in pinaxles (21) and pin holes (20) on the gears $Z_2$, $Z_3$. The said pin holes (20) are evenly distributed along the distribution circles of the pin holes of the gears $Z_2$ and $Z_3$. The said pin axles (21) are evenly fixed on the distribution circles of the pin axles on gears Z and Z and are inserted into the corresponding pin holes (20). Their geometric sizing relation should obey the following formula:

$$D = d_r + a_{12} + a_{34}\delta$$

Where

D ... ... diameter of pin hole on gears $Z_2$, $Z_3$,

$d_T$ ... ... diameter of pin sleeves on the pins fixed at gears $Z_2$, $Z_3$,

$a_{12}, a_{34}$ and $\delta$ as defined above.

Fig. 1 to Fig. 4 show four kinds of intermediate rotational delivery mechanisms having stable drives. the gears $Z_2$ and $Z_3$ can also provide rotational delivery by means of crossed slideblock and cross-grooved float disk, but centrifugal load may occur during operation and vibration be likely generated at high speed input. Between gears $Z_2$ and $Z_3$, a zero teeth-differences gear pair can be used for conjunction, such as incorporating an internal gear $Z_6$ at the side face of the planet gear $Z_3$ and an external gear $Z_5$ at the side face of the planet gear $Z_2$ and then meshing $Z_5$ with $Z_6$ while $Z_6 - Z_3 = 0$. Thus, driven by gear pair $Z_6$, $Z_5$, a rotational motion will be delivered by $Z_3$ to $Z_2$ at ratio of 1:1 and, by meshing $Z_2$ with $Z_1$, an output motion can be obtained. But, using drive of zero teeth-differences as the conjunction mechanism of $Z_2$ and $Z_3$ may complicate the processing and calculation and if $Z_6 \neq Z_5$, there will become another form of planetary transmission mechanism.

The mechanism of the present invention shown in Fig. 5 is a transformation of the mechanism shown in Fig. 2. The internal meshing gear pair $Z_1$, $Z_2$, the output shaft, the planetary rotational delivery mechanism and the crankshaft are all similar and omitted in this description. Now, the dissimilarity is that the gear $Z_3$ in the mechanism shown in fig. 2 becomes a binary gear combined by $Z_3$ and $Z_{3-1}$, and $Z_4$ becomes two internal gears $Z_4$ and $Z_{4-1}$. $Z_{4-1}$ and $Z_{3-1}$ as well as $Z_4$ and $Z_3$ are respectively internal meshing. The said $Z_{4-1}$ and $Z_4$ can be at standstill or rotation by themselves. For instance, if $Z_{4-1}$ is at standstill, then $Z_4$ may rotate, or vice versa. Thus, as far as $Z_{4-1}$ or $Z_4$ is at standstill, two reduction transmission ratios can be obtained.

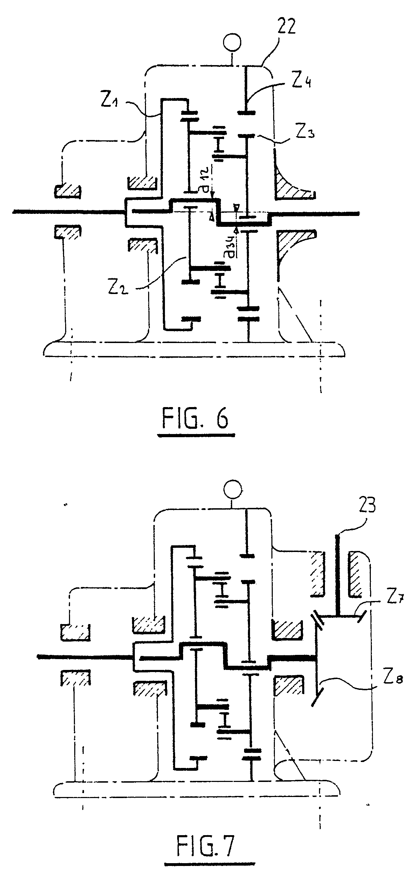

Fig. 6 6 shows the single-(step) driving double-axle reducer made by utilizing the planetary mechanism of involute gears with complex minor teeth-differences. Here the internal meshing gear pairs of $Z_1$, $Z_2$ and $Z_3$, $Z_4$, the intermediate planetary rotational delivery mechanism, the crankshaft and the output shaft are similar to those of the mechanism shown in fig. 2 and omitted here for further description. The said gear Z is integrated with the reducer housing (22).

Fig. 7 shows the double-(step) driving planetary with an additional single-(step) helical-bevel gear pair transmission mechanism attached to the single-(step) driving double-axle reducer shown in fig. 6. Here, one end of the crankshaft is stationary mounted with a helical-bevel gear $Z_8$, the drive input shaft (23) passes through the bearing hole of the gear box its one end on the gear box mounted with a helical bevel gear $Z_7$ that meshes with Z. The rest of the construction is similar to that in the reducer shown in fig. 6 and here omitted for further description.

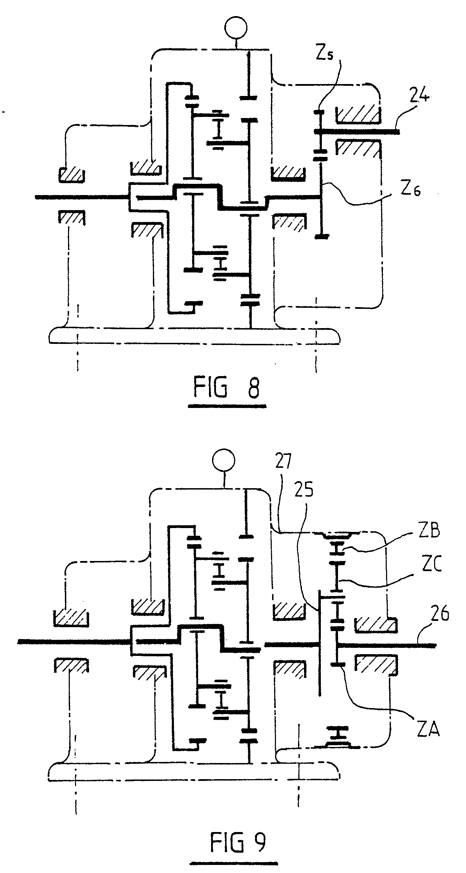

Fig. 8 shows the double-(step) planetary reducer with an additional driving of a single-(step) helical gear pair attached to the single-(step) driving double-axle reducer shown in fig 6. The crankshaft is stationary mounted with a helical gear $Z_6$, the drive inputshaft (24) passes through the bearing hole of the gearbox with its one end on the gear box mounted with a helical gear $Z_5$ that meshes with $Z_6$. The rest of the construction is similar to that in the reducer shown in fig. 6 and here omitted for further details.

Fig. 9 shows the double-(step) driving planetary reducer with an additional single-(step) driving planetary transmission mechanism attached to the single-(step) driving double-axle reducer shown in fig. 6. Here, the planetary transmission mechanism includes an internal gear $Z_B$ stationed on the housing, planet gear $Z_c$ and sun gear $Z_A$, the drive input shaft (26) passes through the bearing hole of the housing and connects with the sun gear $Z_A$, and the crankshaft connects with the planet gear $Z_c$ through the crank (25). The said planet gear $Z_c$ can

ce made not only in steel but also in high strength engineering plastic in order to achieve even loading and low noise. As a kind of the transformation, the internal gear $Z_B$ can be attached with a overload safety device before fixing it to the housing (27), so that in case of overloading, the internal gear $Z_B$ can be protected by its floating relative to the housing (27) of the gear box.

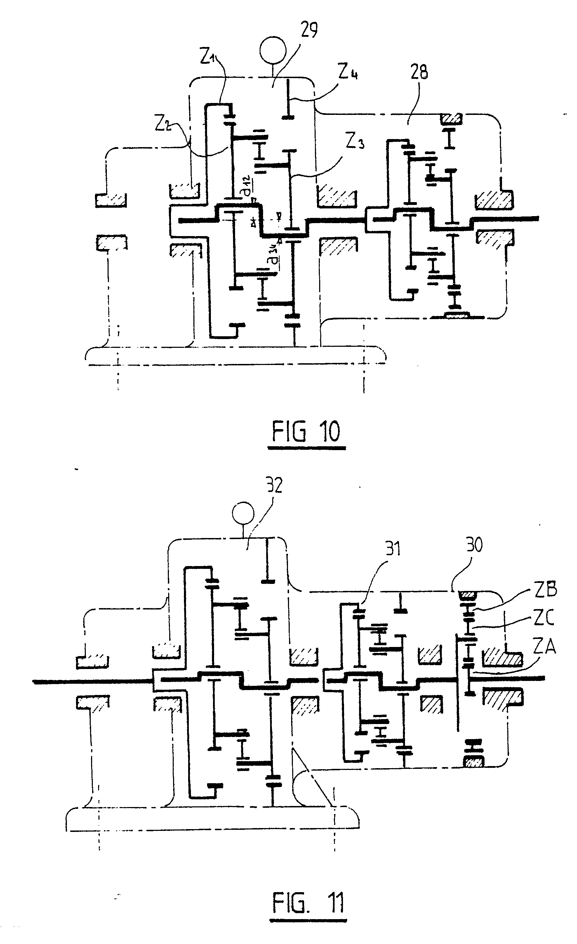

Fig. 10 shows the double-(step) planetary reducer applying two single-(step) driving double-axle reducers (28) (29) in tandem. The construction of which has been elaborated in the illustration of the construction shown in fig. 2 and the slight modification is that the output shaft of one of its reducers is conjucted with the input shaft of the other's.

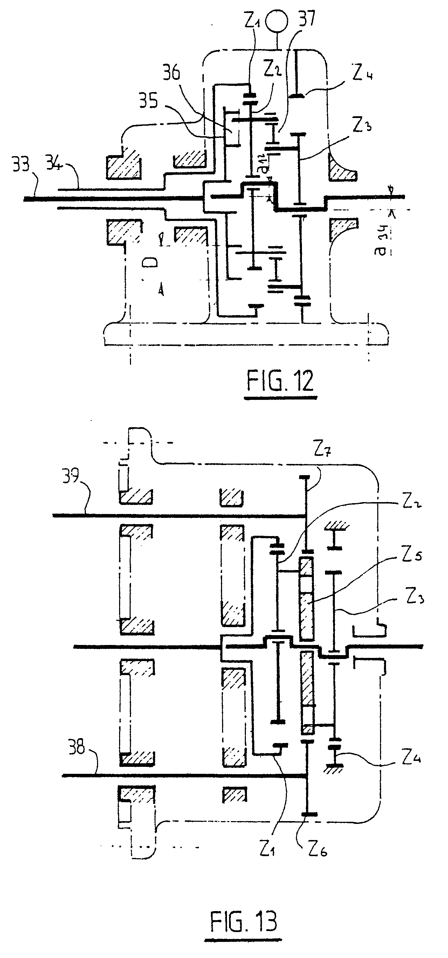

Fig. 11 shows the three-(step) driving planetary reducer. The single-(step) driving (30) is the planetary mechanism that has been detailed in the illustration of the construction shown in fig. 9, whereas the double and three-(step) drivings (31) (32) are formed by the tandem conjuction of the single-(step) driving double-axle reducer shown in fig.6.

Fig. 12 shows the planetary reducer with simultaneous two speed rotation at outputs and the reducer mechanism of which consists in the internal meshing gear pairs $Z_1$, $Z_2$ and $Z_3$, $Z_4$, the crankshaft and the planetary rotational delivery mechanism. The drive outputs are delivered by the output shafts. The construction of this reducer is similar to that of the reducer shown in fig. 6. The said drive output shaft (34) is a hollow sleeve. In addition, there is another drive output shaft (33) passed through the drive output shaft sleeve (34) with its one end stationed along with a round disk (35), which has some evenly distributed holes (36). One end of the pin of the planetary rotational delivery mechanism (37) is inserted into the pin hole of the planet gear whereas the other end is inserted into the hole of the round disk (36). Their geometric sizing should obey the following formula:
$$D_k = d_T + a \cdot 2 + \delta.$$
Where

$D_k$ ... ... diameter of the hole on the round disk,

$d_T$ ... ... diameter of the pin sleeve for the pin on the planetary rotational delivery mechanism,

$a_{12}$ and $\delta$ as defined above.

Fig. 13 shows the planetary reducer of involute gears with complex minor teeth-differences having simultaneous outputs of multi-rotations and applying drive disk rotational delivery mechanism shown in fig. 1, which consists in the internal meshing gear pairs $Z_1$, $Z_2$ and $Z_3$, $Z_4$, the crankshaft, the intermediate drive disk rotational delivery mechanism and the output shaft, and so is omitted here the repetition. The characteristic of this construction is that the drive disk is also an external gear $Z_5$ in itself and the other two drive output shafts (38) (39) are also passing through the bearing holes of the housing with their terminals fixed respectively with the gears $Z_6$ and $Z_7$ that mesh with $Z_5$ (drive disk), and so the construction provides altogether three drive outputs shafts that can produce different transmission ratios by changing the teeth-numbers of $Z_5$, $Z_6$ and $Z_7$.

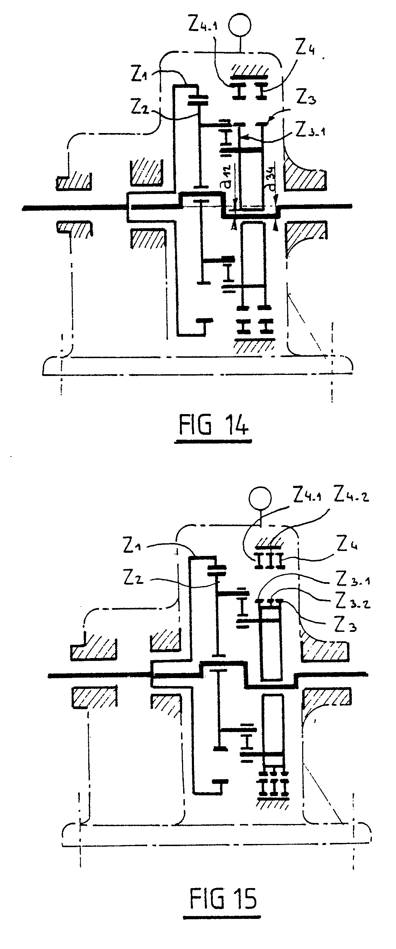

Fig. 14 shows the lateral double-axle planetary speed transmission utilizing change-speed transmission mechanism shown in fig. 5.

Fig. 15 shows the planetary speed transmission with three transmission ratios utilizing change-speed transmission mechanism shown in fig. 5 with the only difference of incorporating three internal gears $Z_4$, $Z_{4-1}$, $Z_{4-2}$, and a triple-external gears $Z_3$, $Z_{3-1}$ and $Z_{3-2}$. here the said $Z_4$, $Z_3$, $Z_{4-1}$, $Z_{3-1}$, and $Z_{4-2}$, $Z_{3-1}$ are respectively meshed with, and $Z_4$, $Z_{4-1}$ and $Z_{4-2}$ are, respectively, either standstill or rotating, so that if one of them is standstill, the others are idle. Thus, the transmission ratio $i_1$ is formed by $Z_1$, $Z_2$, $Z_{4-1}$ and $Z_{3-1}$, the $i_2$ by $Z_1$, $Z_2$, $Z_{4-2}$ and $Z_{3-2}$ and $i_3$ by $Z_1$, $Z_2$, $Z_4$ and $Z_3$. Similarly, more transmission ratios can be obtained by the increase in number of the gear pairs.

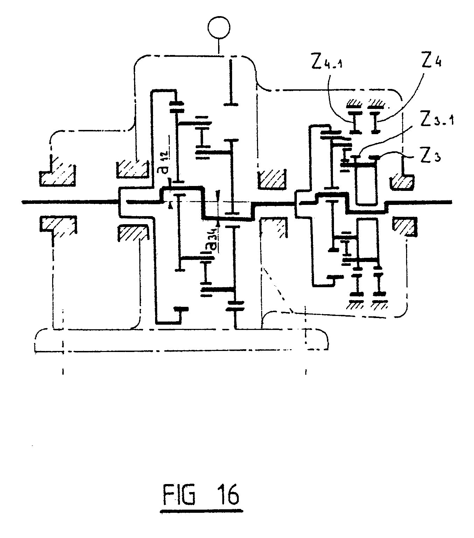

Fig. 16 shows the planetary speed transmission formed by tandem connection of the reducer shown in fig. 6 to the speed transmission shown in fig. 14.

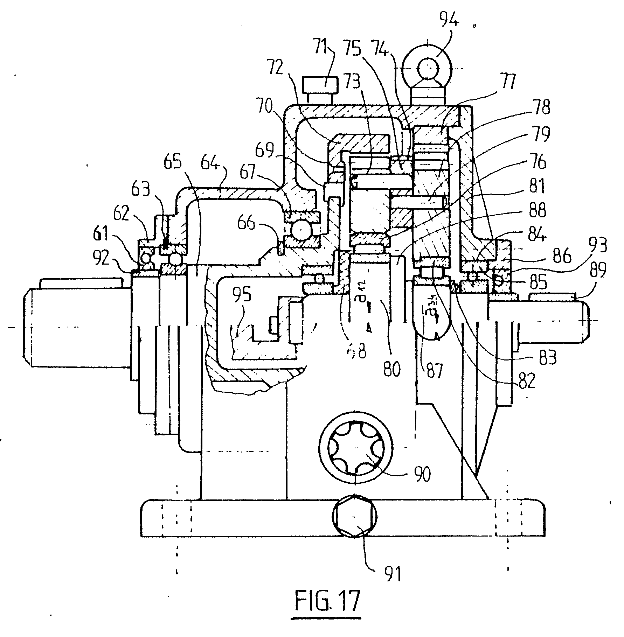

Fig. 17 is the constructional diagram of the single-(step) driving double-axle planetary reducer shown in fig. 6. Here, on the left side of the reducer housing (64) are opened with dual bearing holes mounted respectively with bearings (63) and (69) and the dual journals of the output shaft (65) are respectively inserted into the inner holes of the bearings (63) and (67) and forming transition fittings thereof. The end cap (62) packed with seal (61) is screwed at the housing (64) and asserting axial pressure upon the bearing (65). The grip ring (92) mounted on the output shaft (65) retains the inner collar of the bearing (63) from moving axially and outside the grip ring (92) is packed with the seal (61). The right terminal of the output shaft is in the form of flange structure integrally riveted with the internal gear (22) by rivet (70) and jointed by saddle key (69) so that large twist torque can be delivered. At the center of the output shaft flange is a concave structure with bearing (66) mounted therein. The journal of one end of the crankshaft (38) is inserted into the inner collar hole of the bearing (66) and the journal of the other end is mounted with bearing (85). which is located within the hole (84) of the bearing base of the end cap (81). which is screwed at the housing (64). The end cap (86) is screwed at the end cap (81) and pressing upon the bearing (85). The end cap (86) with seal (93) is internally packed and the crankshaft (88) incorporates two toggles (80) (87), of which the eccentricities are $a_{12}$ and $a_{34}$ respectively. On the crank axle of the toggles (80) and (87) are respectively mounted with bearings (76) (82), the exteriors of which are mounted with planetary gears (73) (78). The circular internal gear (77) is mounted into the internal gear ring base of the housing (64) and fastened therein by cylindrical pin (not shown in the diagram). The surface of the end cap (81) is pressing upon the internal gear (77). The planet gears (73) (78) are respectively meshing with the internal gears (72) (77). Between the bearings (66) and (76) and the bearings (82) and (85), are the bearing retainer ings (68) (83). Between the planet gears (73) and (78) is mounted a planetary rotational delivery device which consists in pin (79), planet wheel (75) and nylon cover (74) (the details of which will be given later in this description). The right end of the crankshaft (88) is also provided with single key slot with the single key inserted therein. On the housing (64) are provided hoisting ring (94), oiling hole and vent plug (71), drainage hole and plug (91) and lubrication oil peephole (90). The said bearings (66) (85) may either be annular spherical roller bearing or annular short cylindrical roller bearing. The said bearings (76) (82) are annular short cylindrical roller bearing. The input end of the said crankshaft (88) and the terminal of the drive output shaft (65) can also apply, in addition to above mentioned single key structure, inner hole-and-key groove or spline hole structures, or otherwise transverse grooved end face structure and expansion joint bushing structure. The relatively high power driving, an adjustable or stationary balancer (95) should be added at the left end of the high-speed rotating crankshaft (88) of the single-(step) rotational planetary reducer (i,e. the speed transmission) in order to achieve binary balancing and stable driving for the transmission device.

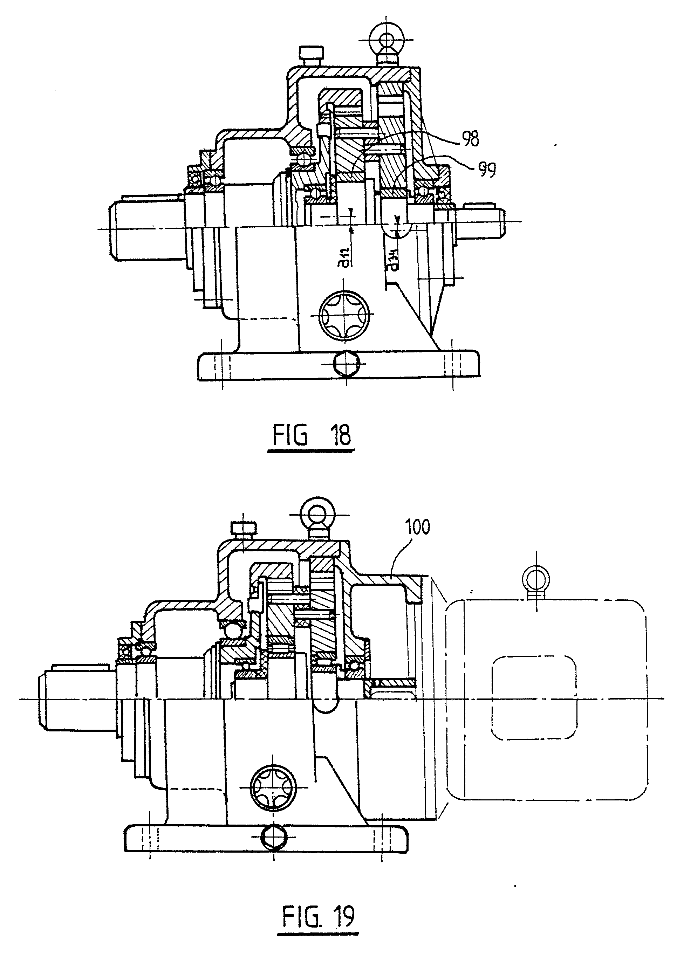

The reducer shown in fig. 18 is single-(step) driving double-axle planetary reducer shown in fig. 17 with its roller bearings (76) (82) replaced by slide bearings (98) (99).

The reducer shown in fig. 19 is the single-(step) driving double-axle planetary reducer shown in fig. 17 with its end cap added with motor stand (100), whereon the motor is erected by means of flange.

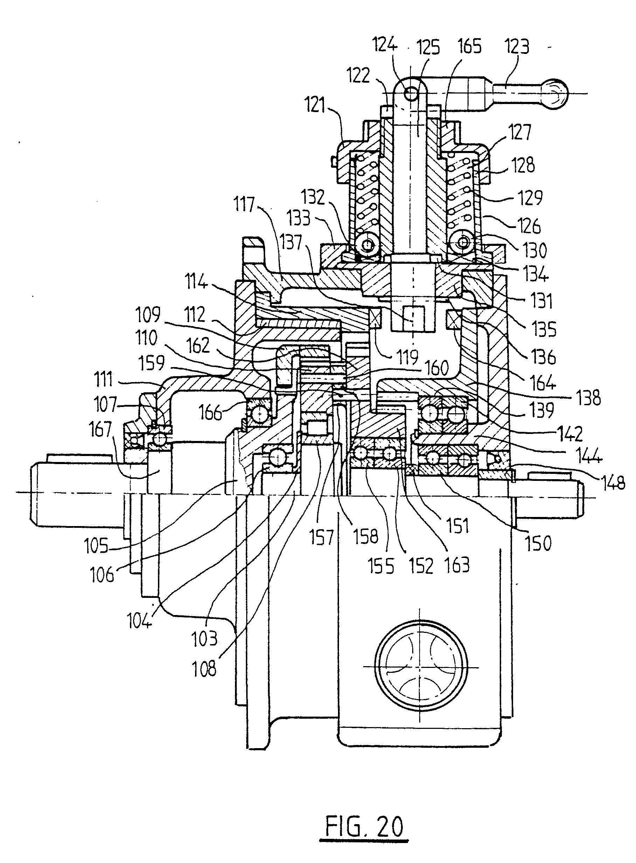

As shown in fig. 20, the planetary gear speed transmission consists in the housing (117) ; the bearing base (111) is fixed on the housing (117) by screws and two roller bearings (107) (106) that may be single row annular ball bearings mounted into the bearing base (111). The cylindrical axle shoulders (105) (167) of the internal gear (109) are mounted into the said bearings (107) (106). The bearing (106), which may be single row annular ball bearing or double row annular spherical roller bearing is mounted into the dent hole that is concentric with the axle shoulder (105) located in the internal gear (109). The journal of one end of the crankshaft (103) with two toggles is mounted into the inner collar hole of the bearing (106) and the toggles' amounts of eccentricities are $a$ and $a$ respectively. On the crankshaft of the $a$ is mounted with bearing (108) which may be annular cylindrical roller bearing. The retainer collar (104) which may be of nylon is fitted between the bearing (106) and bearing (108), the exterior of which is mounted with planet gear (110) that meshes internally with the internal gear (109). The shoulder of the bearing base (111) is mounted with the sleeve (112), which is concentric with the crankshaft and fastened at the internal gear (114) that incorporates end face clutch teeth (119). The sleeve (112) is provided with circular oil slot and oil hole (not shown in the diagram) and the internal gear (114) is also provided with the same correspondingly (not shown in the diagram). The internal gear (114) ans sleeve (112) are in running fit relations to the bearing base (111). The material of the sleeve (112) may be non ferrous metal. On the $a$ toggle section of the crankshaft (103), the crank is mounted in parallel with two bearings (155) (152), which may be annular ball bearings with separating retainer collar between them. The exteriors of the two bearings (155) (152) are mounted with gears (162) (163), which may either be integral binary gears as shown in the diagram or the gear (162) sleeved on the shoulder of the gear (163) and integrated together by means of cylindrical pin. The gear (162) meshes with the said internal gear (114). On the journal of the crankshaft (103)'s adjacent toggle $a$ section is mounted with two pieces of bearing (150), which are then mounted into the bearing hole base (144) at the right side of the housing (117). The external face of the bearing (150) nest led up against the retaining shoulder of the bearing hole base (144), and between the internal faces of the said bearing and bearing (152) are mounted with retainer collars (151), which may be made of nylon. The gripping sleeve (148) packed with oil seal (147) is mounted on the journal of the crankshaft (103) and pressing upon the internal face of the bearing (105). The said two bearings (150) may be annular cylindrical roller bearing. At the outside of the right bearing base (144) is mounted coaxially to the crankshaft (103) with bearings (139) and (142) with retainner collar separating them. The bearings (139) and (142) may be annular bearings, outside which are mounted with internal gear (138) that meshes with the planet gear (163), and on the end face of which incorporates end face clutch teeth (164) that corresponds to the end face clutch teeth (119) on the gear (114).

The semi-clutch (126) is mounted on the outer side of the housing (117) and its rotor shaft (125) passes through the hole on the disk (134) and is runningly fitted therein. Through the shoulder (136) of the rotor shaft (125) and the spring retaining collar (131), is confined the rotor shaft (125) from moving axially but allows its rotation. The shoulder (135) of the disk (134) is mounted into the hole on the housing (117), so that one end of the rotor shaft (125) with block (137) enters into place between the end face clutch teeth (119) and (164) of the gears (114) (138). The rotor shaft (125) is fitted with spring seat (128), the internal circumference of which is evenly distributed with several longitudinally through holes (127), wherein the steel ball (130) and its retaining spring (129) are mounted. The top of the spring seat (128) are opened with circumferential distributed notches (122). The spring shield (121), which has notches corresponding to the notches (122), is exactly slipped into the top of the spring seat (128) and, by means of the adjusting nut (165), it may join the spring seat (129). The pressing cover (133) confines the spring seat (128) on the desk (134) to rotate only without longitudinal movement, and is screwed on the housing (117) along with the disk (134). The said steel ball (130) is pressing into the positioning groove (132) of the disk (130) under the pressure of the spring (129). The handle (123) is mounted into the upper groove of the rotor shaft (125) and rotatable on the pin (124) as its axle. If the handle is set down, it gets stuck into the notches (122). When the block (137) gets in the way of the end fact clutch teeth (119) or (164), the internal gear (144) or (138) works and the overloaded block automaticaly disengages.

The other ends of some pieces of the pin axles (160) (159) are inserted into the round holes of the planet gear (158) that is covered by nylon shield (157) and in runningly fit therein. Pin axles (160) (159) and planet gear (158) form the planetary rotational delivery mechanism. (The specific construction of which will be detailed later in this description).

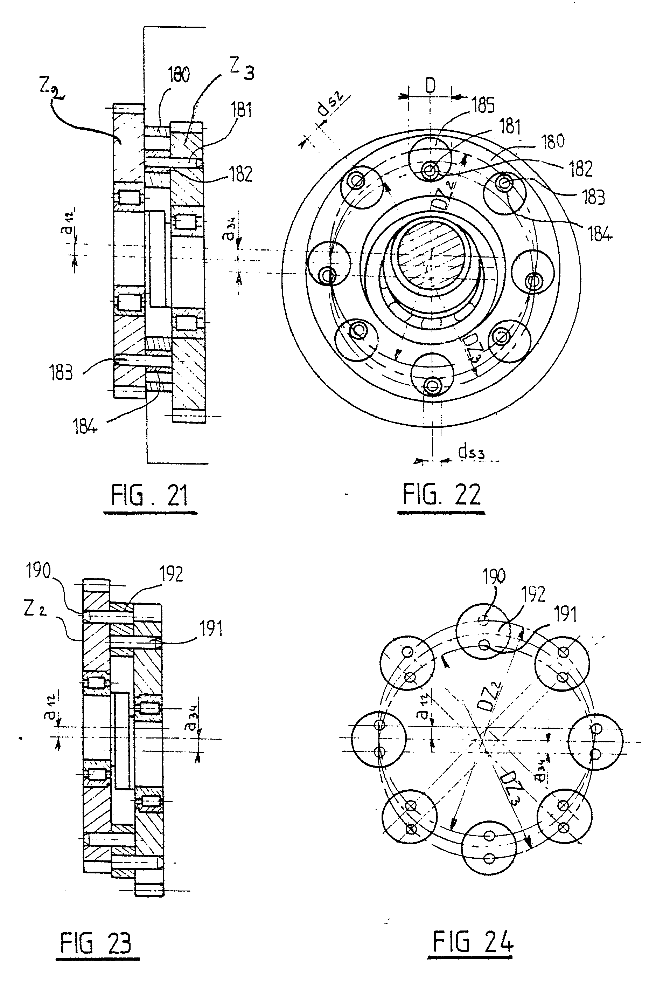

Fig. 21 and fig. 22 show a kind of present invented drive disk rotational delivery mechanism. The gears $Z_2$ and $Z_3$ are respectively mounted on the two crank axle bearings of the crankshaft with their respective eccentricities as $a_{12}$ and $a_{34}$. There are eight holes (185) with diameter D evenly distributed along the circumference $D_z$ of the drive disk (180). The four pieces of cylindrical pin axles (181) are inserted into the holes at the side surface of the gear $Z_3$ and in over-clearance fit therein. The said holes are evenly distributed along the circumference that is concentric with the gear $Z_3$ and formed by the diameter $D_{z3}$. The sleeve (182) is sleeved at the outside of the cylindrical pin axle (181). Four pieces of cylindrical pin axles (183) are inserted into the holes at the side surface of the gear $Z_2$ and in overclearance fit therein. Said holes are evenly distributed along the circumference with diameter $D_{z2}$ which is concentric with the gear $Z_2$. The sleeve (184) is sleeved at the outside at the outside of the cylindrical pin axle (183). The said drive disk (180) is put between the gears $Z_2$ and $Z_3$ and the said eight pieces of pin axles and sleeves (182) (184) are respectively inserted into the eight holes (185) of the drive disk. The sizing relations between them should obey the following formulas:

$$d_{s2} = D - 2a_{12} - \delta,$$
$$d_{s3} = D - 2a_{34} - \delta,$$
$$D_2 = D_{z3} = D_z$$

Where

$d_{s2}$ ... ... diameter of sleeve on the gear $Z_2$,

$d_{s3}$ ... ... diameter of sleeve on the gear $Z_3$,

$D$ ... ... diameter of hole on the drive disk,

$D_{z2}$ ... ... diameter of distribution circle of the pin axle on the gear $Z_2$,

$D_{z3}$ ... ... diameter of distribution circle of the pin axle on the gear $Z_3$,

$D_z$ ... ... diameter of distribution circle of the pin hole in the drive disk.

$\delta$ ... ... clearance preserved for processing and assembly.

Fig. 23 and fig. 24 show the construction of the planetary rotational delivery mechanism. The gears $Z_2$ and $Z_3$ are respectively mounted on the two crank axle bearings of the crankshaft with their respective eccentricities as $a_{12}$ and $a_{34}$. The cylindrical pin axles (190) (191) are respectively inserted into the holes at the holes at the said surface of the gears $Z_2$ and $Z_3$ and in over-clearance fits therein. The said holes are evenly distributed along the circumferences formed by diameters $D_{z3}$ and $D_{z2}$ respectively. The other ends of said pin axles (190) (191) are respectively inserted into the two holes in the diameter of a flat cylinder planet gear (192) and are in running fits therein. The sizing relations between them should obey the following formulas :

$$D_s = a_{12} + a_{34},$$
$$D_{z2} = D_{z3} = D_z$$

Where

$D_s$ ... ... center distance between the two holes on the planet gear,

$D_{z2}$ ... ... diameter of distribution circle of the pin axle on the gear $Z_2$,

$D_{z3}$ ... ... diameter of distribution circle of the pin axle on the gear $Z_3$.

$D_z$ ... ... diameter of the orbital circle formed by the common rotation of the center of the planet gear.

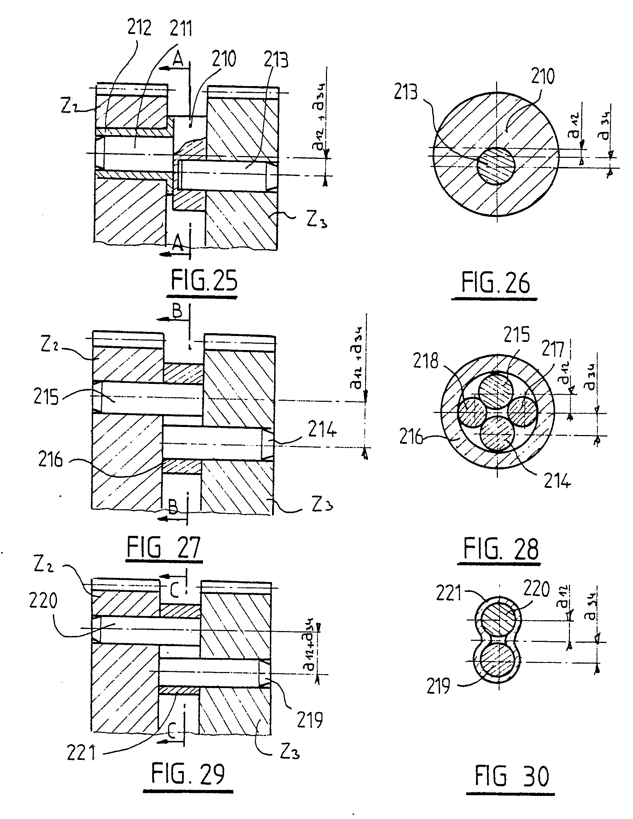

Fig. 25 and fig. 26 show another kind of transformation of the planetary rotational delivery mechanism. If the eccentricity $a_{12} + a_{34}$ is rela-

tively small, the pin axle (211) and planet gear (210) are integrated together and inserted into the sleeves (212) that nestled closely to the gear $Z_2$. One end of the pin axle (213) is inserted into the hole on the gear $Z_3$ and is in close fit therein, while the other end is inserted into the hole on the planet gear (210) and in running fit therein. The said sleeve (212) and the hole on the gear $Z_3$ are evenly distributed along the circumferences formed by diameters $D_{z3}$ and $D_{z2}$. Their sizing relations are similar to those of the planetary transmission mechanisms shown in fig. 23 and fig. 24.

Fig. 27 and fig. 28 show another transformation of the planetary rotational delivery mechanism. The arrangements of the pin axles (214) and (215) are similar to those in the mechanisms shown in fig. 23 and fig. 24. The planet wheel (216) becomes an elastic steel sleeve that sleeved at the outsides of the pin axles (214) and (215). Moreover, in the clearances formed between planet wheel (216) and pin axles (214) (215) are inserted rollers (218) and (217).

Fig. 29 fig. 30 show another transformations of the planetary rotational delivery mechanism. The arrangements of the pin axles (220) are similar to those in the mechanisms shown in fig. 23 and fig. 24. The planet wheel (221) is an elastic enveloped steel sleeve that sleeved at the outsides of the pin axles (220) and (219).

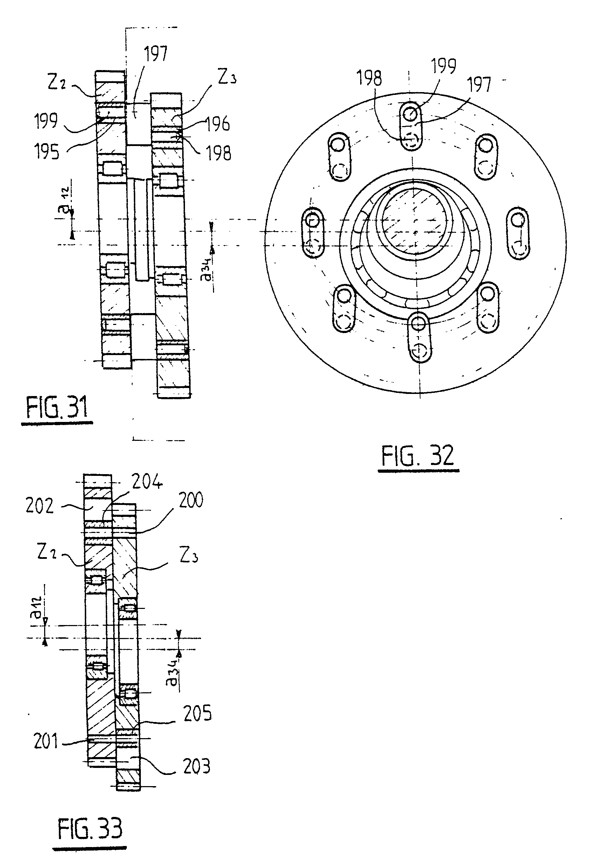

Fig. 31 and fig. 32 show the constructional diagrams of the crank rotational delivery mechanism. The gears $Z_2$ and $Z_3$ are respectively mounted on the two crank axle bearings of the crankshaft with their eccentricities as $a_{12}$ and $a_{34}$ respectively and some holes with sleeves (195) (196) in them are evenly distributed along the hole distribution circles $D_{z2}$ and $D_{z3}$ of the gears $Z_2$ and $Z_3$. The crank axles (198) (199) on the both ends of the crank (197) are respectively inserted into the corresponding holes on the two gears and in running fits therein. The sizing relations between them should obey the following formulas:

$$D_s = a_{12} + a_{34},$$
$$D_z = D_{z2} = D_{z3}.$$
Where

$D_s$ ... ... distance between the axes of the crankshaft's two crank axles,

$D_{z2}$ ... ... diameter of the hole distribution circle on the gear $Z_2$,

$D_{z3}$ ... ... diameter of the hole distribution circle on the gear $Z_3$,

$D_z$ ... ... diameter of the orbital circle formed by the common rotation fo the crankshaft center.

Fig. 33 shows the constructional diagram of the pin axle-and pin sleeve rotational delivery mechanism. The gears $Z_2$ and $Z_3$ are respectively mounted on the two crank axle bearings of the crankshaft. On the gears $Z_2$ and $Z_3$ are evenly distrib-

uted $\underline{n}$ pin axles (200) (201) as well as n round holes (202) (203). The pin axle (200) stationed along with the gear Z is mounted with the pin sleeve (204) and inserted into the hole (202) of $Z_2$. Reversely, the pin axle (201) stationed along with the gear $z_2$ is mounted with the pin sleeve (205) and inserted into the hole (203) of the $Z_3$. The sizing relations between them should obey the following formula:

$$D = d_r + a_{12} + a_{34} + \delta$$

D ... ... hole diameter on gears $Z_2$, $Z_3$,

$d_t$ ... ... pin sleeve diameter on gears $Z_2$, $Z_3$,

$\delta$ ... ... clearance preserved for processing and assembly.

## Claims

1. A planetary transmission mechanism of involute gears with complex minor teeth-differences, relating to involute gear planetary transmission mechanism and including crankshaft (5) with two crank axles, internal meshing gear pairs and rotational delivery mechanism, characterized in that said internally meshing gear pairs are two or more than two pairs, each of which with its planetary gears rotatably sleeved on the said two crank axles of the crankshaft and said planetary gear further connected by said rotational delivery mechanism and the internal gear of one of the said internal gear pairs stationed, or two or more than two internal gears stationed alternatively, while that of the other's is stationed along with the drive output shaft, and the teeth-difference, module and eccentricities of the corresponding crank axles of the said two internally meshing gear pairs being different or the same.

2. The mechanism as claimed in claim 1, characterised in that said internal meshing gear pairs are non corrected straight gear pairs or cycloidal gear pairs or round curved teeth gear pairs with teeth-differences from 5 to 8 teeth.

3. The mechanism as claimed in claim 1, characterized in that said rotational delivery mechanism is a planetary rotational delivery mechanism.

4. The mechanism as claimed in claim 3, characterized in that said planetary rotational delivery mechanism may consist in the pin axle evenly distributed on the gears $Z_2$, $Z_3$ and the planet whell (11) or the elastic steel sleeve (216), or the elastic enveloped steel sleeve (22), or otherwise consist in the pin axles (221) integrated with the planet wheel (210) and inserted into the sleeves (212) distributed evenly on the gear $Z_2$, while the other pin axles (213) are inserted into the holes distributed evenly on the gear $Z_3$ with one of their ends and inserted into the holes on the planet wheel (210) with the other.

5. The mechanism as claimed in claim 1, characterized in that said rotational delivery mechanism is a crank rotational delivery mechanism or drive disk rotational delivery mechanism or a pin axle-and-pin hole rotational delivery mechanism.

6. The mechanism as claimed in claim 1, characterized in that one of the said gears Z is replaced by binary gears ($Z_3$ and $Z_{4-1}$), the said internal gear is replaced by two internal gears (Z and Z), with gear $Z_{1-4}$ meshing with gear $Z_{3-1}$, the gear $Z_4$ meshing with gear $Z_3$ and the said gears $Z_{4-1}$ and $Z_4$ station or float by themselves such as the gear $Z_{4-1}$ stationary, the gear $Z_4$ is rotatable, or vice versa.

7. Single-(speed) driving double reducer related to gear reducer and consisting of a housing, a crank, an internal meshing gear pair and a rotational delivery mechanism, characterized in that the output shaft (65) is mounted on the housing (64) through bearings, the internal gear (72) is stationarily connected to the output shaft (65), the crankshaft (88) is mounted into the inner hole of output shaft (65) through bearings (66, 85) and stationed on the end cover (81) on the housing (64), the gears (73) (78) are mounted on the two crank axles of the crankshaft through bearings (76) (82), the internal gear (77) is stationed on the housing (64), the gear (73) internally meshes with internal gear (72), the gear (78) internally meshes with internal gear (77) and the rotational delivery mechanism is connected between the gear (73) and gear (78).

8. The reducer as claimed in claim 7, characterized in that the said rotational delivery mechanism is a planetary rotational delivery mechanism.

9. The reducer as claimed in claim 7, characterized in that the said crankshaft (88) incorporates binary direction balancing mechanisms (95).

10. The reducer as claimed in claim 7, characterized in that it can be connected in tandem with the cylindrical helical gear external meshing reducer mechanism or the bevel gear reducer or the planet gear reducer or two single-(step) driving reducers to form multi-(step) drive reducer.

11. The reducer as claimed in claim 7, characterized in that said drive output shaft (34) is a holow sleeve wherein the drive shaft (33) penetrates into with one of its terminals stationed to a disk (35) prepared whereon with $n$ pieces of evenly spaced holes, and the one end of the pin axle of the planet wheel rotational delivery mechanism (37) is inserted into the planet wheel's pin axle hole, while the other end is inserted into the hole on the disk (36).

12. The reader as claimed in claim 5, characterized in that said drive disk in itself is also an external gear $Z_5$ and the terminals of another two pieces (or more) of the output shafts (38, 39) extended into the housing are fixed with the gears $Z_6$, $Z_7$ that mesh with gear $Z_5$.

13. A planetary speed transmission related to geared speed transmission and incorporated a housing, a crankshaft with double cranks, an internal meshing gear pair and rotational delivery mechanism, characterized in that the shoulder (105) of the internal gear (109) is mounted on the bearing base (111) through bearing, the crankshaft (103) is mounted through bearing (106) into the concave hole of the internal gear (109) that is concentric with the shoulder (105), the other end of the crankshaft (103) is mounted through the bearing (150) into the bearing base (144) of the housing (117), the gears (110) and the integrated gears (162) (163) are mounted respectively through bearings (108, (155), and (152) onto the outside of the crank axle at $\underline{a}$ and $\underline{a}$, the internal gear with end face clutch teeth (119) in it is fastened on the sleeve (112) which is further sleeved onto the shoulder of the bearing base that is concentric with the crankshaft, the internal gear (138) with end face clutch teeth (164) is mounted through bearings (139) (142) on the outside of the bearing base (144) and is coaxial with the crankshaft (103), the gears (109) and (110), (162) and (114), (163) and (138) are meshing respectively, the planet wheel rotational delivery mechanism is connected between the gears (162) and (110), the one end with block (137) in it of the rotor shaft (125) of the semiclutch (126) that is mounted on the outside of the housing (117) extends into the space between the end face clutch teeth (119) and (164) and by rotating the rotor shaft (125) may obstruct the block (164) or (119), thus braking the rotation of the internal gear (138) or (114).

14. The reducer as claimed in claim 13, characterized in that one rotor shaft (125) of the semiclutch (126) penetrates into the hole of the disk (134) and is in running fit therein with the shoulder (136) and retainer collar (131) confining the rotor shaft (125) to rotate alone without axial movement, the other end with block (137) in it of the rotor shaft (125) enters into the space between the end face clutch teeth (119) and (164), on the rotor shaft (125) is further sleeved with the spring seat (128) whereupon the through hole (127) and the notch (122) are opened, the steel ball (130) and spring (129) are mounted into the through hole (127) the spring shield (121) with notches in it stucks into the top of the spring seat (128) and by means of the adjusting nut (165) connects therein pressing or releasing the spring (128) on the disk (134) to rotate alone without longitudinal movement, the pressing cover (133) and disk (134) are screwed at the housing (177), the steel ball (130) is pressed into the positionning slot of the disk (134) under the action of the spring (129) and the handle (123) is mounted on top of the rotor shaft (125) and may pivotally stuck into the notch (122) of the spring seat (128).

FIG. 1

FIG. 2

FIG. 3

FIG 4

FIG 5

FIG. 6

FIG.7

$Z_5$

24

$Z_6$

FIG 8

27

25

ZB

ZC

26

ZA

FIG 9

FIG 10

FIG. 11

FIG. 12

FIG. 13

FIG 14

FIG 15

FIG 16

FIG. 17

EP 0 300 108 A2

FIG 18

FIG. 19

FIG. 20

FIG. 21

FIG. 22

FIG 23

FIG 24

FIG.25

FIG.26

FIG 27

FIG. 28

FIG. 29

FIG 30

$Z_2$  197  $Z_3$
199  196
195  198

$a_{12}$

$a_{34}$

FIG. 31

198  199  197

FIG. 32

204  200
202
$Z_2$  $Z_3$

$a_{12}$

$a_{34}$

205
201
203

FIG. 33